Europäisches Patentamt

(19) **European Patent Office**

**Office européen des brevets**

(11) Publication number: **0 145 055**
**A2**

(12)

# EUROPEAN PATENT APPLICATION

(21) Application number: **84201605.7**

(22) Date of filing: **07.11.84**

(51) Int. Cl.⁴: **B 29 C 67/18**
//B29C45/14, B29L29:00,
B29L29:00

(30) Priority: **05.12.83 IT 2403283**

(43) Date of publication of application:
**19.06.85 Bulletin 85/25**

(84) Designated Contracting States:
**AT BE CH DE FR LI LU NL SE**

(71) Applicant: **AZA INTERNATIONAL S.r.l.**
**Via C. Alberto 11**
**I-20052 Monza Milan(IT)**

(72) Inventor: **Pirovano, Camillo**
**Loc. Cavigiolo**
**I-22052 Cernusco Lombardone (Como)(IT)**

(74) Representative: **Henke, Erwin et al,**
**Ing.Barzanò & Zanardo Milano S.p.A. Via Borgonuovo,**
**10**
**I-20121 Milano(IT)**

(54) **Method for constructing a conveyor cable for material of fluid behaviour, and the cable obtained thereby.**

(57) This invention relates to a conveyor cable of synthetic material comprising moulded scraping discs, which is intended for use in handling material of fluid behaviour, particularly along tortous paths comprising narrow bends.

Fig.2

EP 0 145 055 A2

This invention relates to a method for constructing a conveyor cable of the scraping disc type intended for use in industrial and agricultural conveyors for handling and conveying material of fluid behaviour, such as granular, powdery, incoherent and like materials.

It is known to form a conveyor cable of this type by moulding plastics scraper discs or fins at predetermined distances apart on a metal cable.

Said scraping cables operate in conveyors in an essentially closed circuit, for example in livestock rearing farms where they follow a fairly varying path which is tortuous but free from very narrow bends, and at the same time they operate for limited periods during the day and at low speed.

It is apparent that the metal nature of the cable material does not enable bends of very small radius or sudden path variations and the like to be undergone without the metal cable breaking in a short time due to fatigue.

This problem increases if stresses of this type are undergone during the whole day or during a large part of it.

There are also problems when the scraping discs encounter unforseen obstacles along the way, so that as they are moulded on a very strong metal cable they tend to be compulsorily dragged, thus suffering breakage or partial separation.

This also happens because the metal cable has a certain rigidity and cannot move or adapt itself to deal with the encountered obstacle.

These problems could be solved by using a cable of synthetic material which certainly possesses the requirements of elasticity and bending strength which are not possessed by a metal cable.

In this respect, it is well resistant to repeated bending even through a very small radius.

However these positive characteristics lead to a series of problems relating to the use of the disc or bladed cable for said conveyors, because when under load the cable undergoes a certain elongation, and its elasticity leads to a reduction in the adherence of the cable to the discs.

In particular, when under load the percentage elongation of the cable is more than that of a metal cable, and this elongation reduces the adherence of the cable to the plastics disc which is moulded on it and which, being braked by external friction, can slide on the cable.

The object of the present invention is to obviate these problems and drawbacks by providing a construction method which allows the formation of a conveyor cable comprising scraping discs or fins moulded on to a cable of synthetic material, which possesses the desirable positive characteristics of a metal cable and of a cable of synthetic material, while obviating the drawbacks of both.

These and further objects are attained according to the present invention by a method for constructing a conveyor cable comprising scraping discs or fins which is intended for use in handling material of fluid behaviour, said discs being applied to a support cable by moulding, characterised by comprising the following series of operations:

- applying a stress to at least one portion of cable and at least in those portions on which the discs or fins are to be moulded, so as to cause a cross-sectional deformation;

- moulding said discs on said narrowed portions;

- cooling;

- opening the mould after said moulded discs have stabilised;

- removing said stress.

Characteristics and advantages of a method for constructing a conveyor cable according to the present invention will be more apparent from the description given hereinafter by way of non-limiting example with reference to the accompanying drawings in which:

Figure 1 is a perspective view of a cable portion subjected to elastic deformation before a disc or fin is moulded thereon;

Figure 2 is a sectional elevation of a portion of a mould containing a cable subjected to elastic deformation during the application of a disc, and a view of a moulded disc; and

Figure 3 is a section on the line III-III of Figure 2.

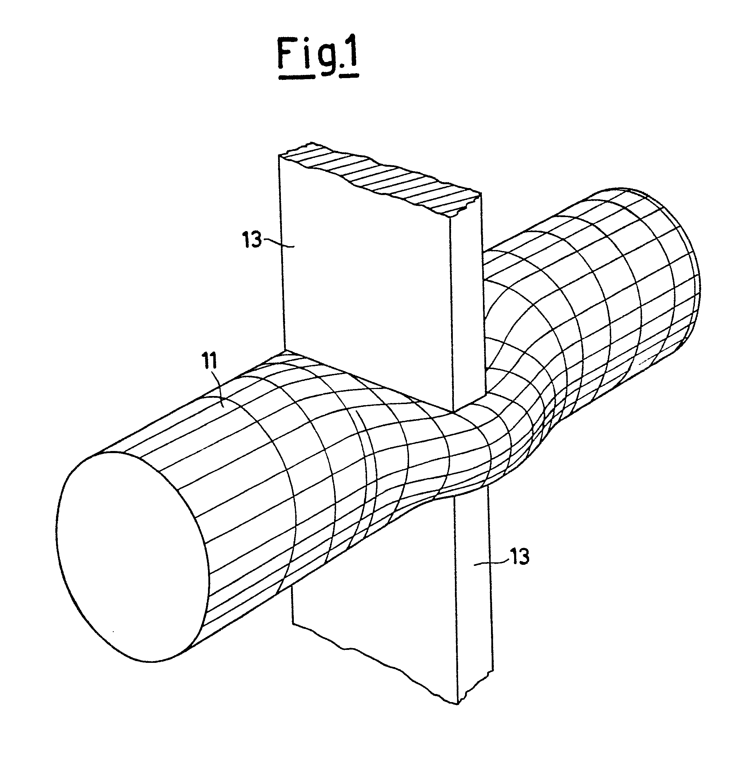

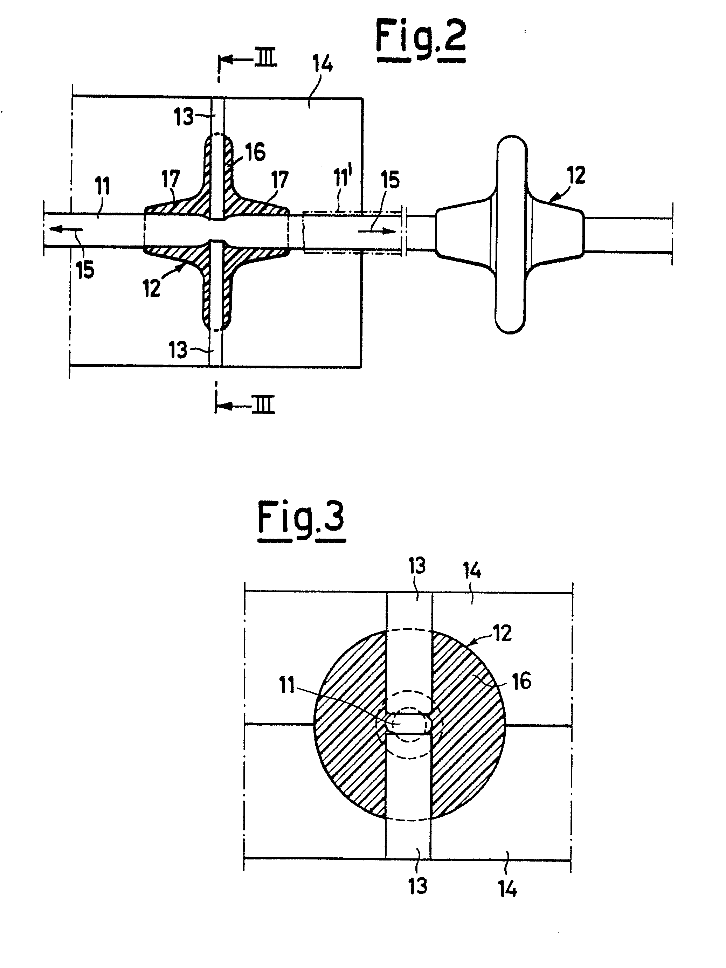

With reference to the drawings, Figure 1 shows a short length of support cable 11 of synthetic material which, in that portion on which a scraping disc 12 of the type shown in Figure 2, but not shown here, is to be applied by moulding, is subjected to a compression stress by means of two blades 13 which deform the initial cross-section in that cable portion.

Figures 2 and 3 show the injection moulding of at least one scraping disc 12, by means of two plates indicated diagrammatically by 14, on to a cable portion 11 of synthetic material which is subjected both to local compression by means of blades 13, which are

subsequently withdrawn, and to traction in the direction of the arrows 15 which reduces its initial cross-section, indicated by dashed and dotted lines 11' in Figure 2. Both the compression stress and the tensile stress in the direction of the arrows 15 must, during the moulding, be greater than the maximum stress applied to the conveyor cable during its operation in a conveyor.

Each scraping disc or fin 12 can in known manner comprise a central disc-shaped portion 16 and a pair of tubular sleeve elements 17 of preferably frusto-conical form, which extend axially along the cable 11 from both sides of the central portion 16.

The method according to the present invention comprises essentially a series of operations to be carried out during the formation of the conveyor cable by moulding the scraping discs.

A cable 11 of synthetic material, which is resistant to bending and is able to undergo elastic elongation, is stressed for example by traction at least in a series of narrow portions, spaced-apart by a predetermined distance, on to which a series of scraping discs or fins 12 are to be applied.

Said discs 12 are applied thereon by means of a multiple mould into which a flexible or resilient plastics material such as polypropylene is injected.

While the mould 14 is still closed, the injected plastics material is made to undergo an initial cooling so that it begins to stabilise.

The mould 14 is opened at this point, and the zone which has just been moulded is fed to a rapid forced cooling station, to obtain complete solidification of the formed discs 12.

It is only at this point that the tensile stress or stresses are removed from the cable portion 11, to obtain a finished portion of conveyor cable.

This procedure is repeated for the entire cable length concerned.

It is apparent that on release, those portions of the cable 11 which are contained within the moulded discs 12 remain compressed therein to a small cross-section, whereas at the ends of the tubular sleeve elements 17 the cable 11 returns to its original cross-section, which extends along the free lengths.

In this respect, if the cable is moulded while keeping it under tension after firstly taking-up both the elastic and settling elongation, said tension tends to reduce the cable cross-section. When the plastics disc has solidified, it imprisons the cable and blocks and elastic recovery, at least in the portion covered by the disc and the relative sleeves, and thus any subsequent elongation during use will be small in that it can relate in percentage terms only to the cable portion which remains bare.

In addition to the tensile stress, the compression blades 13 can act to deform the cross-section in such a manner as to form diametrically opposing outward bulges on two sides and opposing flattened portions on the other two sides, the sides remaining deformed in this manner inside the moulded disc.

The compression blades 13 are extracted after the moulding operation when the discs 12 have begun to solidify, and leave small radial holes in the central portion 16, but which do not affect the proper operation or the efficiency of said discs.

The various moulded discs 18 thus become locked and reliably fixed

to the cable 11 of synthetic material.

As stated, the type of applied stress can be either simple compression, simple tensile, or a stress resulting from the combination of the two.

A conveyor cable constructed in accordance with the method of the present invention has high flexibility and high resistance to bending stress, and its discs or fins are able to withstand considerable loads tending to separate them from the cable.

It is interesting to observe that the combination of a cable of synthetic material and plastics discs or fins creates a conveyor cable which is very strong but at the same time elastically yieldable and able to adapt to and resist unforseen loads.

CLAIMS:

1.     A method for constructing a conveyor cable comprising scraping discs or fins which is intended for use in handling material of fluid behaviour, said discs being applied to a support cable by moulding, characterised by comprising the following series of operations:

-    applying a stress to at least one portion of cable and at least in those portions on which the discs or fins are to be moulded, so as to cause a cross-sectional deformation;

-    moulding said discs on to said narrowed portions;

-    cooling;

-    opening the mould after said moulded discs have stabilised;

-    removing said stress.

2.     A method as claimed in claim 1, characterised by comprising the forced cooling of said moulded discs.

3.     A method as claimed in claim 1, characterised in that said stress on said cable portion is a tensile stress.

4.     A method as claimed in claim 1, characterised in that said stress is a compression stress in the zones on which said discs are moulded.

5.     A method as claimed in claim 1, characterised in that said stress is of compound type and comprises a tensile stress in the cable portion and a compression stress in the zones on which said discs are moulded.

6.     A conveyor cable comprising scraping discs, characterised by being formed of plastics material and having narrowed cross-sections in the zones on which said discs are applied by moulding.

## Fig.1

Fig.2

Fig.3